(19) Europäisches Patentamt
European Patent Office
Office européen des brevets

(11) **EP 1 109 025 B1**

(12) **FASCICULE DE BREVET EUROPEEN**

(45) Date de publication et mention
de la délivrance du brevet:
**10.09.2008 Bulletin 2008/37**

(51) Int Cl.:
*G01P 3/56* (2006.01)  *G01P 3/50* (2006.01)
*G01C 22/02* (2006.01)  *B60T 8/00* (2006.01)

(21) Numéro de dépôt: **00403540.8**

(22) Date de dépôt: **15.12.2000**

(54) **Procédé de détermination des vitesses et accélérations longitudinales et de lacet d'un véhicule**

Verfahren zur Bestimmung von Längsgeschwindigkeiten und -beschleunigungen sowie der Gierraten eines Fahrzeugs

Method for determination of longitudinal speeds and accelerations and of yaw rates of a vehicle

(84) Etats contractants désignés:
**DE ES GB IT**

(30) Priorité: **16.12.1999 FR 9915865**

(43) Date de publication de la demande:
**20.06.2001 Bulletin 2001/25**

(73) Titulaires:
• **RENAULT S.A.S.**
**92100 Boulogne Billancourt (FR)**
• **Peugeot Citroën Automobiles**
**92200 Neuilly Sur Seine (FR)**

(72) Inventeurs:
• **Taffin, Christian**
**92380 Garches (FR)**
• **Baize, Thierry**
**75017 Paris (FR)**

(74) Mandataire: **Kohn, Philippe**
**Cabinet Philippe Kohn**
**30, rue Hoche**
**93500 Pantin (FR)**

(56) Documents cités:
EP-A- 0 672 554     EP-A- 0 855 597
EP-B- 0 508 146

**Description**

L'invention concerne un procédé de détermination des vitesses et accélérations longitudinales et de lacet d'un véhicule.

L'invention concerne plus particulièrement un procédé de détermination de la vitesse longitudinale d'un véhicule du type comprenant au moins deux roues gauche et droite non motrices appartenant à un même train de roues, des moyens de freinage du véhicule et des moyens de calcul.

L'invention concerne aussi un procédé de détermination de la vitesse transversale ou de lacet d'un véhicule du type décrit précédemment.

La détermination des vitesses longitudinale et de lacet, ainsi que des accélérations longitudinale et de lacet d'un véhicule automobile, est nécessaire au fonctionnement de certains organes du véhicule, et notamment d'une boîte de vitesse automatique.

En effet, la détermination des changements de rapport d'une transmission automatique est classiquement basée sur l'utilisation d'informations représentatives de la vitesse du véhicule et de son accélération longitudinale comme décrit dans la demande de brevet français n˚ 97.08324, ou encore, sur l'utilisation d'informations représentatives du comportement transversal du véhicule, c'est-à-dire de sa vitesse et/ou de son accélération transversale comme décrit dans la demande de brevet français n˚ 98.07526.

La détermination de telles informations est généralement réalisée par des capteurs, tels que des capteurs accélérométriques ou des capteurs d'angle du volant du véhicule. Ces informations sont ensuite traitées par des systèmes de calcul électronique. Cependant, de tels capteurs et systèmes de calcul électronique ont un coût élevé.

Une autre solution consiste à déterminer les vitesses et les accélérations transversales et longitudinales à partir d'informations représentatives de la vitesse de rotation des roues et des diamètres de la bande de roulement des pneumatiques des roues du véhicule.

Cependant, la seule mesure de la vitesse de rotation des roues ne permet pas d'obtenir une précision suffisante. En effet, les vitesses longitudinale, et transversale et par conséquent les accélérations du véhicule, sont sensibles aux variations du diamètre de la bande de roulement des roues du véhicule qui sont dues notamment à l'usure et aux différences de pression à l'intérieur des pneumatiques. Par exemple, une différence de l'ordre de 5 mm sur le diamètre de la bande de roulement d'une roue du véhicule provoque une différence de l'ordre de 5 ms$^{-2}$ sur l'accélération longitudinale du véhicule. Des dispositifs, tels que des capteurs de pression, permettent la détermination indirecte du diamètre de la bande de roulement des roues. Toutefois, ces dispositifs sont chers et nécessitent un traitement particulier des informations fournies.

Dans le but de remédier à ces inconvénients, l'invention propose un procédé de détermination de la vitesse longitudinale du type décrit précédemment caractérisé en ce qu'il comporte les étapes successives suivantes :

- acquisition de données représentatives des vitesses de rotation wrg et wrd des roues ;
- détermination des vitesses de rotation wg et wd desdites roues;
- détermination de l'écart relatif EV des vitesses des roues selon l'expression mathématique EV = (wg-wd)/(wg+wd) ;
- détermination, à partir de l'écart relatif EV des vitesses, de l'écart relatif ER des rayons de la bande de roulement des roues selon l'expression mathématique ER = (Rd-Rg)/(Rg+Rd) dans laquelle Rd et Rg sont les diamètres réels de la bande de roulement desdites roues ;
- détermination de la vitesse longitudinale VL du véhicule selon l'expression mathématique VL = (Rm/2)$^{*}$((wd+wg) + ER(wd-wg)) dans laquelle Rm est une valeur constante représentative du rayon moyen de la bande de roulement des roues.

L'invention propose aussi un procédé de détermination de la vitesse de lacet d'un véhicule du type décrit précédemment caractérisé en ce qu'il comporte les étapes successives suivantes :

- acquisition de données représentatives des vitesses de rotation wrg et wrd des roues ;
- détermination des vitesses de rotation wg et wd des roues ;
- détermination de l'écart relatif EV des vitesses des roues selon l'expression mathématique EV = (wg-wd)/(wg+wd) ;
- détermination, à partir de l'écart relatif EV des vitesses, de l'écart relatif ER des rayons de la bande de roulement des roues selon l'expression mathématique ER = (Rd-Rg)/(Rg+Rd) dans laquelle Rd et Rg sont les diamètres réels de la bande de roulement desdites roues ;
- détermination de la vitesse de lacet $\dot{\Psi}$ du véhicule selon l'expression mathématique $\dot{\Psi}$ = (Rm/L)*((wd-wg)+ER (wd+wg)) dans laquelle Rm est une valeur constante représentative du rayon moyen de la bande de roulement des roues non motrices, et L est la distance transversale qui sépare les roues gauche et droite.

Selon d'autres caractéristiques des procédés :

- pour déterminer l'écart relatif ER des rayons de la bande de roulement des roues à partir de l'écart relatif EV des vitesses desdites roues on procède de la manière suivante :

. lorsque la valeur absolue de la différence entre l'écart relatif EV des vitesses des roues non motrices et la valeur de la moyenne EVmoy(t) dudit écart relatif EV, qui est définie par la formule EVmoy(t) = EVmoy(t-Te)* (1-$\lambda$1)+$\lambda$1*EV(t) dans laquelle Te est la période d'échantillonnage des moyens de calcul et $\lambda$1 est un facteur d'oubli qui est fonction de la période d'échantillonnage, est inférieure à une première valeur de seuil déterminée ; et

. lorsque les moyens de freinage du véhicule ne sont pas actionnés,

l'écart relatif ER des rayons de la bande de roulement desdites roues est alors déterminé par la formule mathématique suivante :

$$ER = \frac{1}{N} * \left( \int_{t-N}^{t} EV(t) * dt \right)$$

dans laquelle T est la durée du parcours du véhicule déjà effectué et N est une durée inférieure à la durée T ;

. lorsque la valeur absolue de la différence entre l'écart relatif EV des vitesses des roues et la valeur de la moyenne EVmoy(t) dudit écart relatif EV est supérieure ou égal à la valeur de seuil déterminée ; ou

. lorsque les moyens de freinage du véhicule sont actionnés ;

la valeur de l'écart relatif ER des rayons de la bande de roulement des roues prise en compte, pour la détermination de VL et $\dot{\Psi}$, est alors la dernière valeur de l'écart relatif ER calculée, pour laquelle la valeur absolue de la différence entre l'écart relatif EV des vitesses des roues et la moyenne dudit écart relatif EVmoy est inférieure à la première valeur de seuil déterminée lorsque les moyens de freinage du véhicule ne sont pas actionnés ;

- l'écart relatif ER des rayons de la bande de roulement des roues est calculé en fonction de l'écart relatif EV des vitesses des roues selon l'expression ER(t) = ER(t-Te)*(1-$\lambda$2)+$\lambda$2*EV(t), dans laquelle Te est la période d'échantillonnage des moyens de calcul et $\lambda$2 est un facteur d'oubli qui est fonction de la période d'échantillonnage ;
- au cours d'une étape supplémentaire on dérive la vitesse longitudinale VL par rapport au temps pour déterminer l'accélération longitudinale AL du véhicule ;
- au cours d'une étape supplémentaire on effectue la multiplication de la vitesse longitudinale VL et de la vitesse de lacet $\dot{\Psi}$ pour obtenir l'accélération transversale AT du véhicule ;
- lorsque la valeur de l'écart relatif ER des rayons de la bande de roulement des roues est supérieure à une seconde valeur de seuil déterminée, une anomalie des pneumatiques est détectée.

D'autres caractéristiques et avantages de l'invention apparaîtront à la lecture de la description détaillée qui suit pour la compréhension de laquelle on se reportera aux figures annexées dans lesquelles :

- la figure 1 représente schématiquement en vue de dessus un véhicule automobile en situation de virage ;
- la figure 2 représente l'architecture générale modulaire d'un système de calcul électronique qui met en oeuvre l'invention ;
- la figure 3 représente l'architecture détaillée d'un module du système de calcul électronique qui met en oeuvre l'invention.

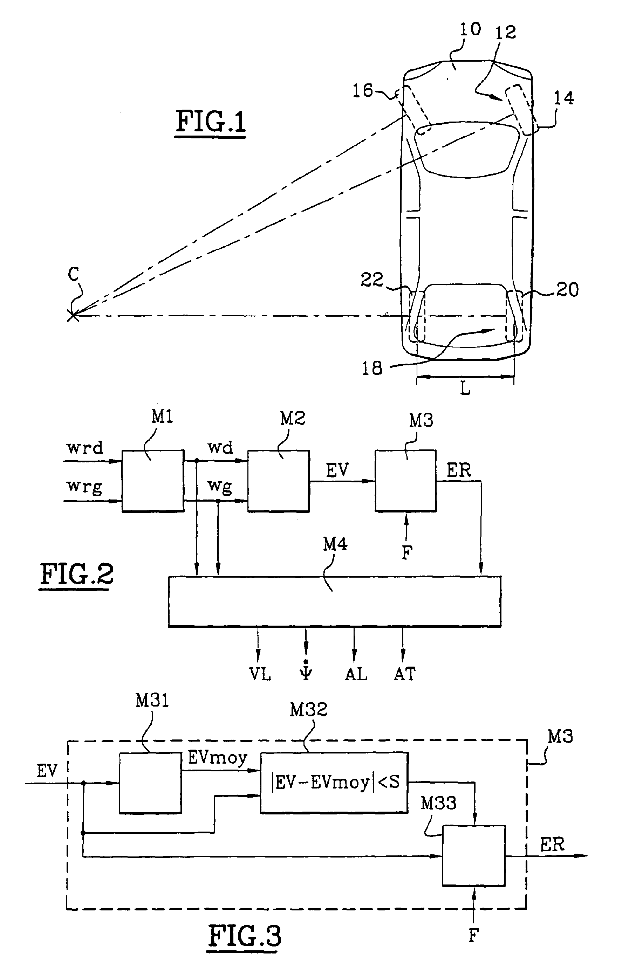

Dans la description qui suit une orientation droite gauche et avant arrière, non limitative, est utilisée conformément à l'orientation de la figure 1 et au sens de déplacement du véhicule 10.

La figure 1 représente un véhicule automobile 10 en situation de virage dont le centre instantané de courbure est matérialisé par le point C.

Le véhicule 10 se compose d'un train de roues avant 12, qui comporte une roue droite 14 et d'une roue gauche 16, et d'un train de roues arrières 18 qui comporte une roue droite 20 et d'une roue gauche 22. Selon l'exemple proposé, le véhicule 10 est tracté par les roues motrices 14 et 16 du train de roues avant 12, le train de roues arrières 18 n'est pas moteur.

Dans la suite de la description, des mesures sont effectuées sur des roues, ici sur les roues 20 et 22 non motrices du train arrière 18. En effet, pour que les mesures reflètent la situation réelle du véhicule, il est nécessaire que le glissement entre les roues sur lesquelles sont effectuées les mesures et le sol soit nul ou quasi nul. Or, les roues motrices peuvent glisser par rapport au sol notamment lors des phases d'accélération ou de décélération. Un tel glissement ou patinage peut se produire dans d'autres situations qui seront détaillées dans la suite.

Les bandes de roulement des roues arrières droite 20 et gauche 22 ont un rayon Rd et Rg respectivement. Les rayons Rd et Rg sont la valeur moyenne du rayon de la bande de roulement du pneumatique respectif à un instant "t" donné.

Les roues arrières 20 et 22 sont séparées par une distance L aussi appelée "voie" du véhicule 10.

Des moyens de freinage, non représentés, permettent au conducteur du véhicule automobile 10 de freiner de façon à adapter la vitesse du véhicule. Un capteur de freinage fournit un signal représentatif F de l'activation des moyens de freinage. Le capteur de freinage fonctionne ici en tout ou rien, c'est-à-dire que, lorsque le signal représentatif F est nul, les moyens de freinage ne sont pas activés, on a alors F=0, et lorsque le signal représentatif n'est pas nul, les moyens de freinage sont activés, on a alors F=1.

Un freinage provoque un glissement des roues par rapport au sol et donc un biais sur les mesures des vitesses des roues. Le signal F est transmis à un système de calcul électronique dont l'architecture générale modulaire est représentée à la figure 2, de façon à prendre en compte le risque d'existence d'une telle situation.

Des capteurs de vitesse de rotation, non représentés, sont montés sur l'axe de rotation de chacune des deux roues arrières non motrices 20 et 22 du véhicule 10. Ils permettent de fournir des signaux wrd et wrg qui traduisent en signaux électriques les vitesses de rotation de la roue droite 20 et gauche 22. Les signaux wrd et wrg fournis sont transmis au système de calcul électronique pour être exploités.

Un premier module M1 reçoit les signaux wrd et wrg qu'il traite à l'aide d'un filtre, et notamment un filtre passe-bas, afin de supprimer d'éventuelles perturbations telles que des bruits hautes fréquences. Le premier module M1 fournit au deuxième module M2 du système de calcul des signaux wd et wg qui sont représentatifs de la vitesse de rotation des roues arrières droite 20 et gauche 22.

Cela permet de calculer la vitesse longitudinale VL, la vitesse de lacet $\dot{\Psi}$, exprimée en rad/s, qui est une vitesse d'orientation globalement transversale par rapport au véhicule, ainsi que les accélérations longitudinale AL et transversale AT à partir des formules mathématique suivantes :

$$VL = (wd*Rd+wg*Rg)/2$$

$$\dot{\Psi} = (wd*Rd-wg*Rg)/L$$

$$AL = dVL/dt$$

$$AT = VL*\dot{\Psi}$$

Cependant, les valeurs des rayons Rd et Rg des bandes de roulement des pneumatiques ne sont pas constantes dans le temps. Leurs variations, provoquées notamment par des changements de pression de l'air se trouvant à l'intérieur des pneumatiques, par l'usure de la bande de roulement ou encore un dégonflage accidentel tel qu'une crevaison, provoquent des variations sensibles des valeurs des vitesses VL et $\dot{\Psi}$ ainsi que des valeurs des accélérations AL et AT.

Afin de prendre en compte les variations des rayons Rd et Rg des roues arrières droite 20 et gauche 22, le procédé selon l'invention propose de calculer l'écart relatif EV des vitesses de rotation des roues selon l'expression mathématique EV = (wg-wd)/(wg+wd).

Le système de calcul électronique détermine ensuite l'écart relatif ER du rayon de la bande de roulement des pneumatiques des roues, tel que ER = (Rd-Rg)/(Rg+Rd), à partir de l'écart relatif EV des vitesses de rotation des roues.

Les formules mathématiques qui permettent de déterminer les vitesses et les accélérations longitudinales et transversales VL, $\dot{\Psi}$, AL et AT peuvent s'écrire en fonction des vitesses de rotation wd et wg des roues arrières et de l'écart relatif ER. Les formules mathématiques s'écrivent alors :

$$VL = Rm*[(wd+wg)+ER*(wd-wg)]/2 \qquad (1)$$

$$\dot{\Psi} = Rm*[(wd-wg)+ER*(wd+wg)]/L \qquad (2)$$

$$AL = d(VL)/dt \qquad\qquad (3)$$

$$AT = VL * \dot{\Psi} \qquad\qquad (4)$$

dans lesquelles Rm est une valeur constante représentative du rayon moyen de la bande de roulement des roues non motrices, c'est-à-dire que Rm = (Rdi+Rgi)/2, pour lequel Rdi et Rgi sont des valeurs constantes des rayons de la bande de roulement des roues droite 20 et gauche 22, telles que leurs valeurs initiales, ou leurs valeurs avec une usure déterminée.

Le procédé selon l'invention ne nécessite donc aucun capteur supplémentaire, minimisant ainsi les coûts des dispositifs nécessaires à la détermination des vitesses et des accélérations du véhicule.

Le module M2 calcule l'écart relatif EV des vitesses de rotation des roues à partir des signaux wd et wg représentatifs de la vitesse de rotation des roues.

À partir, de l'écart relatif EV des vitesses de rotation des roues et du signal F, le troisième module M3 détermine l'écart relatif ER.

Pour ce faire, on peut considérer que sur un trajet routier d'une durée T suffisamment grande, la vitesse de lacet $\dot{\Psi}$ du véhicule 10 tend à être nulle, car le trajet tend à terme vers la ligne droite. Ainsi, la formule mathématique (2) est de la forme :

$$\dot{\Psi} = Rm*[(wd-wg)+ER*(wd+wg)]/L \text{ qui tend vers } 0$$

d'où

$$ER \text{ tend vers } (wg-wd)/(wd+wg) = EV$$

Donc, sur un trajet d'une durée T suffisamment grande, l'écart relatif ER des rayons de la bande de roulement des roues est égal à la moyenne temporelle de l'écart relatif EV des vitesses des roues du véhicule. La moyenne temporelle étant la division par la durée T de l'intégrale entre 0 et T de l'écart relatif ER qui s'écrit :

$$ER = \frac{1}{T} * \left( \int_0^T EV(t) * dt \right) \qquad (5)$$

Le quatrième module M4 calcule ensuite les vitesses longitudinale VL et de lacet $\dot{\Psi}$ à partir des formules mathématiques (1) et (2) et de la valeur ER calculée.

Cependant, ce procédé ne prend pas en compte des variations rapides, dues par exemple à une crevaison, de la valeur de l'écart relatif ER du rayon de la bande de roulement des roues. Il est donc avantageux de calculer l'écart relatif ER sur un trajet d'une durée N plus courte que la durée T. Pour respecter la condition de convergence vers 0 de la vitesse transversale $\dot{\Psi}$, il est alors nécessaire d'effectuer le calcul de l'écart relatif ER du rayon de la bande de roulement des roues arrières 20 et 22 uniquement en ligne droite.

À cet effet, conformément à la figure 3, le premier sous-module M31 du module M3 calcule la moyenne EVmoy de l'écart relatif EV des vitesses des roues du véhicule sur une durée déterminée.

Puis, le second sous-module M32 compare la valeur absolue ABS de la différence entre l'écart relatif EV des vitesses des roues du véhicule à un instant donné et la moyenne EVmoy, et à une valeur de seuil S1 déterminée selon la formule mathématique :

$$ABS = |EV - EVmoy| < S1 \qquad (6)$$

Si la valeur absolue ABS est inférieure à la valeur de seuil S1 déterminée, le véhicule 10 est en ligne droite. L'écart relatif ER qui est calculé par le sous-module M33, est alors égal à la moyenne temporelle pendant la durée N de l'écart relatif EV des vitesses des roues du véhicule, c'est à dire :

$$ER = \frac{1}{N} * \left( \int_{t-N}^{t} EV(t) * dt \right) \qquad (7)$$

En situation de freinage, c'est-à-dire si F=1, les valeurs des écarts relatifs ER et EV et de la moyenne ERmoy peuvent être faussées. La suspension des calculs est alors nécessaire. En effet, au cours du freinage, les roues droite 20 ou gauche 22 subissent un glissement, et les valeurs des vitesses des roues ne reflètent absolument pas la situation réelle et fournissent au système de calcul électronique des informations erronées.

Ainsi, lorsque F=1, le système de calcul électronique suspend le calcul des trois valeurs ER, EVmoy et EV. Lorsque l'une de ces valeurs est nécessaire au fonctionnement ou à la commande d'un organe du véhicule automobile 10, la valeur fournie par le système de calcul électronique pour le fonctionnement ou la commande de cet organe est, par exemple, la dernière valeur calculée avant que le signal F ne devienne égal à 1.

Selon une variante, un deuxième sous-module M32 détermine la moyenne EVmoy de l'écart relatif EV de la vitesse des roues par le calcul de la moyenne dite "glissante" qui s'écrit selon la formule mathématique suivante :

$$EVmoy(t) = (1-\lambda 1)*EVmoy(t-Te) + \lambda 1*EV(t) \qquad (8)$$

dans laquelle, Te est la période d'échantillonnage du système de calcul électronique donc EVmoy(t-Te) est la valeur précédente calculée par le système du calcul électronique, et $\lambda 1$ est un facteur d'oubli qui est fonction de la période d'échantillonnage du système de calcul électronique et de la durée sur laquelle la moyenne est réalisée.

Le calcul de la moyenne dite "glissante" permet de pondérer les termes présents dans son calcul. Un "poids" plus important est donné aux termes récemment acquis par le système de calcul électronique ce qui permet "d'oublier" les termes anciens.

Selon une autre variante, un troisième sous-module M33 détermine l'écart relatif ER des rayons de la bande de roulement des roues par le calcul de la moyenne dite "glissante" qui s'écrit selon la formule mathématique suivante:

$$ER(t) = (1-\lambda 2)*ER(t-Te) + \lambda 2*EV(t) \qquad (9)$$

dans laquelle Te est la période d'échantillonnage du système de calcul électronique, ER(t-Te) est donc la valeur précédente calculée par le système du calcul électronique et $\lambda 2$ est un facteur d'oubli qui est fonction de la période d'échantillonnage du système de calcul électronique et de la durée sur laquelle la moyenne est calculée.

Selon des étapes supplémentaires, le procédé selon l'invention permet de déterminer les accélérations longitudinale AL et transversale AT du véhicule 10 des vitesses longitudinale VL et de lacet $\dot{\Psi}$. Pour ce faire, le système électronique de calcul utilise les formules mathématiques (3) et (4).

Ainsi, le procédé selon l'invention permet de déterminer "l'état routier" du véhicule 10, c'est-à-dire les accélérations longitudinale AL et transversale AT et les vitesses longitudinale VL et de lacet $\dot{\Psi}$, uniquement à partir, de l'acquisition et du traitement de signaux wrd et wrg représentatifs de la vitesse de rotation des roues et d'un signal représentatif F de l'activation des moyens de freinage du véhicule.

Ces informations sont notamment utilisées à des fins de décision ou d'adaptation des changements des rapports d'une transmission automatique.

De plus, la valeur de l'écart relatif ER des rayons de la bande de roulement des roues permet à une unité de contrôle centralisé, non représentée, de détecter une anomalie des pneumatiques. L'anomalie peut notamment résulter d'une crevaison ou de l'usure anormale du pneumatique d'une des deux roues. En effet, si la valeur de l'écart relatif ER devient supérieure à une valeur de seuil S2 déterminée, cela indique une différence de rayons des pneumatiques des roues gauche 20 et droite 22 qui est supérieure à une valeur déterminée qui est fonction de la valeur de seuil S2. L'unité de contrôle centralisé peut alors signaler l'anomalie au conducteur du véhicule 10, notamment par un voyant lumineux ou un signal sonore.

**Revendications**

1. Procédé de détermination de la vitesse longitudinale d'un véhicule (10) comprenant au moins deux roues gauche (22) et droite (20) non motrices appartenant à un même train de roues (18), des moyens de freinage du véhicule et des moyens de calcul, **caractérisé en ce qu'**il comporte les étapes successives suivantes :

   - acquisition de données représentatives des vitesses de rotation wrg et wrd desdites roues (22, 20) ;
   - détermination des vitesses de rotation wg et wd desdites roues (22, 20) ;
   - détermination de l'écart relatif EV des vitesses des roues (20, 22) selon l'expression mathématique EV=(wg-wd)/(wg+wd) ;
   - détermination, à partir de l'écart relatif EV des vitesses, de l'écart relatif ER des rayons de la bande de roulement des roues (22, 20) selon l'expression mathématique ER = (Rd-Rg)/(Rg+Rd) dans laquelle Rg et Rd sont les diamètres réels de la bande de roulement desdites roues (22, 20) ;
   - détermination de la vitesse longitudinale VL du véhicule selon l'expression mathématique VL = (Rm/2)*((wd+wg) + ER*(wd-wg)) dans laquelle Rm est une valeur constante représentative du rayon moyen de la bande de roulement des roues (20, 22).

2. Procédé de détermination de la vitesse de lacet d'un véhicule (10) du type comprenant au moins deux roues gauche (22) et droite (20) non motrices appartenant à un même train de roues (18), des moyens de freinage du véhicule et des moyens de calcul, **caractérisé en ce qu'**il comporte les étapes successives suivantes :

   - acquisition de données représentatives des vitesses de rotation wrg et wrd des roues (22, 20) ;
   - détermination des vitesses de rotation wg et wd des roues (22, 20) ;
   - détermination de l'écart relatif EV des vitesses des roues (20, 22) selon l'expression mathématique EV = (wg-wd)/(wg+wd) ;
   - détermination, à partir de l'écart relatif EV des vitesses, de l'écart relatif ER des rayons de la bande de roulement des roues (20, 22) selon l'expression mathématique ER = (Rd-Rg)/(Rg+Rd) dans laquelle Rg et Rd sont les diamètres réels de la bande de roulement desdites roues (20, 22) ;
   - détermination de la vitesse de lacet $\dot{\Psi}$ du véhicule selon expression mathématique $\dot{\Psi}$ = (Rm/L)*((wd-wg) + ER*(wd+wg)) dans laquelle Rm est une valeur constante représentative du rayon moyen de la bande de roulement des roues (20, 22), et L est la distance transversale qui sépare les roues gauche (22) et droite (20).

3. Procédé de détermination de la vitesse d'un véhicule (10) selon l'une des revendications 1 ou 2, **caractérisé en ce que** pour déterminer l'écart relatif ER des rayons de la bande de roulement des roues (20, 22) à partir de l'écart relatif EV des vitesses desdites roues (20, 22) on procède de la manière suivante :

   - lorsque la valeur absolue de la différence entre l'écart relatif EV des vitesses des roues (20, 22) et la valeur de la moyenne EVmoy(t) dudit écart relatif EV, qui est définie par la formule EVmoy(t) = EVmoy(t-Te)*(1-λ1) +λ1*EV(t) dans laquelle Te est la période d'échantillonnage des moyens de calcul et λ1 est un facteur d'oubli qui est fonction de la période d'échantillonnage, est inférieure à une première valeur de seuil déterminée ; et
   - lorsque les moyens de freinage du véhicule ne sont pas actionnés,

   l'écart relatif ER des rayons de la bande de roulement des roues (20, 22) est alors déterminé par la formule mathématique suivante :

$$ER = \frac{1}{N} * \left( \int_{t-N}^{t} EV(t) * dt \right)$$

   dans laquelle N est la durée du parcours du véhicule déjà effectué;

   - lorsque la valeur absolue de la différence entre l'écart relatif EV des vitesses des roues (20, 22) et la valeur de la moyenne EVmoy(t) dudit écart relatif EV est supérieure ou égal à la valeur de seuil déterminée; ou
   - lorsque les moyens de freinage du véhicule sont actionnés ;

   la valeur de l'écart relatif ER des rayons de la bande de roulement des roues prise en compte, pour la détermination de VL et $\dot{\Psi}$, est alors la dernière valeur de l'écart relatif ER calculée, pour laquelle la valeur absolue de la différence entre l'écart relatif EV des vitesses des roues (20, 22) et la moyenne dudit écart relatif EVmoy est inférieure à la première valeur de seuil déterminée lorsque les moyens de freinage du véhicule ne sont pas actionnés.

4. Procédé selon la revendication 3, **caractérisé en ce que** l'écart relatif ER des rayons de la bande de roulement des roues est calculé en fonction de l'écart relatif EV des vitesses des roues selon l'expression ER(t) = ER(t-Te)* $(1-\lambda 2) + \lambda 2*EV(t)$, dans laquelle Te est la période d'échantillonnage des moyens de calcul et $\lambda 2$ est un facteur d'oubli qui est fonction de la période d'échantillonnage.

5. Procédé selon la revendication 1, ou selon la revendication 3 prise en combinaison avec la revendication 1, **caractérisé en ce qu'**au cours d'une étape supplémentaire on dérive la vitesse longitudinale VL par rapport au temps pour déterminer l'accélération longitudinale AL du véhicule.

6. Procédé selon la revendication 2 prise en combinaison avec la revendication 1, ou selon la revendication 3 prise en combinaison avec les revendications 1 et 2, **caractérisé en ce qu'**au cours d'une étape supplémentaire on effectue la multiplication de la vitesse longitudinale VL et de la vitesse de lacet $\Psi$ pour obtenir l'accélération transversale AT du véhicule.

7. Procédé selon l'une quelconque des revendications précédentes, **caractérisé en ce que** lorsque la valeur de l'écart relatif ER des rayons de la bande de roulement des roues (20, 22) est supérieure à une seconde valeur de seuil déterminée, une anomalie des pneumatiques est détectée.

## Claims

1. Method of determining the longitudinal speed of a vehicle (10) comprising at least two non-driving wheels, left (22) and right (20), belonging to the same wheel set (18), means of braking the vehicle and means of calculation, **characterized in that** it includes the following successive stages:

   - acquiring data representing the rotational speeds wrg and wrd of the said wheels (22, 20);
   - determining the rotational speeds wg and wd of the said wheels (22, 20);
   - determining the relative deviation EV of the speeds of the wheels (20, 22) according to the mathematical expression EV = (wg-wd)/(wg+wd);
   - determining, from the relative deviation EV of the speeds, the relative deviation ER of the radii of the treads of the wheels (22, 20) according to the mathematical expression ER = (Rd-Rg)/(Rg+Rd), where Rg and Rd are the real diameters of the treads of the said wheels (22, 20);
   - determining the longitudinal speed VL of the vehicle according to the mathematical expression VL = (Rm/2)* ((wd+wg)+ER*(wd-wg)), where Rm is a constant value representing the mean radius of the treads of the wheels (20, 22).

2. Method of determining the yaw rate of a vehicle (10) of the type comprising at least two non-driving wheels, left (22) and right (20), belonging to the same wheel set (18), means of braking the vehicle and means of calculation, **characterized in that** it includes the following successive stages:

   - acquiring data representing the rotational speeds wrg and wrd of the wheels (22, 20);
   - determining the rotational speeds wg and wd of the wheels (22, 20);
   - determining the relative deviation EV of the speeds of the wheels (20, 22) according to the mathematical expression EV = (wg-wd)/(wg+wd);
   - determining, from the relative deviation EV of the speeds, the relative deviation ER of the radii of the treads of the wheels (20, 22) according to the mathematical expression ER = (Rd-Rg)/(Rg+Rd), where Rg and Rd are the real diameters of the treads of the said wheels (20, 22);
   - determining the yaw rate $\ddot{\Psi}$ of the vehicle according to the mathematical expression $\ddot{\Psi}$ = (Rm/L)*((wd-wg) +ER*(wd+wg)), where Rm is a constant value representing the mean radius of the treads of the wheels (20, 22), and L is the transverse distance which separates the left (22) and right (20) wheels.

3. Method of determining the speed of a vehicle (10) according to one of Claims 1 or 2, **characterized in that** to determine the relative deviation ER of the radii of the treads of the wheels (20, 22) from the relative deviation EV of the speeds of the said wheels (20, 22), the procedure is as follows:

- when the absolute value of the difference between the relative deviation EV of the speeds of the wheels (20, 22) and the value of the mean EVmoy(t) of the said relative deviation EV, defined by the formula EVmoy(t) = EVmoy(t-Te)*(1-λ1)+λ1*EV(t), where Te is the sampling period of the means of calculation and λ1 is a forgetting factor which is a function of the sampling period, is less than a first determined threshold value; and
- when the means of braking the vehicle are not activated;

the relative deviation ER of the radii of the treads of the wheels (20, 22) is then determined by the following mathematical formula:

$$ER = \frac{1}{N} * \left( \int_{t-N}^{t} EV(t) * dt \right)$$

where N is the vehicle's transit time which has already passed;

- when the absolute value of the difference between the relative deviation EV of the speeds of the wheels (20, 22) and the value of the mean EVmoy(t) of the said relative deviation EV is greater than or equal to the determined threshold value; or
- when the means of braking the vehicle are activated;

the value of the relative deviation ER of the radii of the treads of the wheels which is taken into account for determining VL and $\dot{\Psi}$ is then the last calculated value of the relative deviation ER for which the absolute value of the difference between the relative deviation EV of the speeds of the wheels (20, 22) and the mean of the said relative deviation EVmoy is less than the first determined threshold value when the means of braking the vehicle are not activated.

4. Method according to Claim 3, **characterized in that** the relative deviation ER of the radii of the treads of the wheels is calculated as a function of the relative deviation EV of the speeds of the wheels, according to the expression ER (t) = ER(t-Te)*(1-λ2)+λ2*EV(t), where Te is the sampling period of the means of calculation and λ2 is a forgetting factor which is a function of the sampling period.

5. Method according to Claim 1, or according to Claim 3 taken in combination with Claim 1, **characterized in that** in the course of a supplementary stage, the longitudinal speed VL relative to time is derived, to determine the longitudinal acceleration AL of the vehicle.

6. Method according to Claim 2 taken in combination with Claim 1, or according to Claim 3 taken in combination with Claims 1 and 2, **characterized in that** in the course of a supplementary stage, the longitudinal speed VL and yaw rate $\dot{\Psi}$ are multiplied, to obtain the transverse acceleration AT of the vehicle.

7. Method according to any one of the preceding claims, **characterized in that** when the value of the relative deviation ER of the radii of the treads of the wheels (20, 22) is greater than a second determined threshold value, a fault of the tyres is detected.

**Patentansprüche**

1. Verfahren zur Bestimmung der Längsgeschwindigkeit eines Fahrzeugs (10), umfassend zumindest zwei Nichtantriebsräder, ein linkes (22) und rechtes (20), die ein und demselben Radsatz (18) angehören, Mittel zum Bremsen des Fahrzeugs und Berechnungsmittel, **dadurch gekennzeichnet, dass** es folgende aufeinanderfolgende Schritte aufweist:

- Erfassung von Daten, die für die Drehzahlen wrg und wrd der Räder (22, 20) repräsentativ sind;
- Bestimmung der Drehzahlen wg und wd der Räder (22, 20),
- Bestimmung der relativen Abweichung EV der Geschwindigkeiten der Räder (20, 22) gemäß dem mathematischen Ausdruck EV=(wg-wd)/(wg+wd);

- Bestimmung der relativen Abweichung ER der Radien der Reifenlauffläche der Räder (22, 20) gemäß dem mathematischen Ausdruck ER=(Rd-Rg)/(Rg+Rd) ausgehend von der relativen Abweichung EV der Geschwindigkeiten, wobei Rg und Rd die reellen Durchmesser der Reifenlauffläche der Räder (22, 20) sind;
- Bestimmung der Längsgeschwindigkeit VL des Fahrzeugs gemäß dem mathematischen Ausdruck VL = (Rm/2)*((wd+wg) + ER*(wd-wg)), wobei Rm ein konstanter Wert ist, der für den mittleren Radius der Reifenlauffläche der Räder (20, 22) repräsentativ ist.

2. Verfahren zur Bestimmung der Giergeschwindigkeit eines Fahrzeugs (10) vom Typ, umfassend zumindest zwei Nichtantriebsräder, ein linkes (22) und ein rechtes (20), die ein und demselben Radsatz (18) angehören, Mittel zum Bremsen des Fahrzeugs und Berechnungsmittel, **dadurch gekennzeichnet, dass** es folgende aufeinanderfolgende Schritte aufweist:

- Erfassung von Daten, die für die Drehzahlen wrg und wrd der Räder (22, 20) repräsentativ sind;
- Bestimmung der Drehzahlen wg und wd der Räder (22, 20),
- Bestimmung der relativen Abweichung EV der Geschwindigkeiten der Räder (20, 22) gemäß dem mathematischen Ausdruck EV=(wg-wd)/(wg+wd);
- Bestimmung der relativen Abweichung ER der Radien der Reifenlauffläche der Räder (22, 20) gemäß dem mathematischen Ausdruck ER=(Rd-Rg)/(Rg+Rd) ausgehend von der relativen Abweichung EV der Geschwindigkeiten, wobei Rg und Rd die reellen Durchmesser der Reifenlauffläche der Räder (22, 20) sind;
- Bestimmung der Giergeschwindigkeit $\psi$ = des Fahrzeugs gemäß dem mathematischen Ausdruck $\psi$ = (Rm/L) *((wd-wg) + ER*(wd+wg)), wobei Rm ein konstanter Wert ist, der für den mittleren Radius der Reifenlauffläche der Räder (20, 22) repräsentativ ist und L der transversale Abstand ist, der das linke Rad (22) vom rechten Rad (20) trennt.

3. Verfahren zur Bestimmung der Geschwindigkeit eines Fahrzeugs (10) nach Anspruch 1 oder 2, **dadurch gekennzeichnet, dass** man, um die relative Abweichung ER der Radien der Reifenlauffläche der Räder (20, 22) ausgehend von der relativen Abweichung EV der Geschwindigkeiten der Räder (20, 22) zu bestimmen, folgendermaßen vorgeht:

- wenn der absolute Wert der Differenz zwischen der relativen Abweichung EV der Geschwindigkeiten der Räder (20, 22) und dem Wert des Durchschnitts EVmoy(t) der relativen Abweichung EV, der durch die Formel EVmoy(t) = EVmoy(t-Te)*(1-λl)+λl*EV(t) festgelegt ist, in der Te die Probennahmeperiode der Berechnungsmittel und λ1 ein Vergessen-Faktor ist, der Funktion der Probennahmeperiode ist, kleiner als ein erster bestimmter Schwellenwert ist und
- wenn die Bremsmittel des Fahrzeugs nicht betätigt sind, wird die relative Abweichung ER der Radien der Reifenlauffläche der Räder (20, 22) nun durch die folgende mathematische Formel bestimmt:

$$ER = \frac{1}{N}*\left(\int_{t-N}^{t} EV(t)*dt\right)$$

in der N die Dauer für die bereits zurückgelegte Fahrstrecke des Fahrzeugs ist;
- wenn der absolute Wert der Differenz zwischen der relativen Abweichung EV der Geschwindigkeiten der Räder (20, 22) und dem Wert des Durchschnitts EVmoy(t) der relativen Abweichung EV größer oder gleich dem bestimmten Schwellenwert ist oder
- wenn die Bremsmittel des Fahrzeugs betätigt sind, ist der Wert der relativen Abweichung ER der Radien der Reifenlauffläche der berücksichtigten Räder für die Bestimmung von VL und $\psi$ in dem Falle der letzte Wert der berechneten relativen Abweichung ER, für die der absolute Wert der Differenz zwischen der relativen Abweichung EV der Geschwindigkeiten der Räder (20, 22) und dem Durchschnitt der relativen Abweichung EVmoy kleiner als der erste bestimmte Schwellenwert ist, wenn die Bremsmittel des Fahrzeugs nicht betätigt sind.

4. Verfahren nach Anspruch 3,
**dadurch gekennzeichnet, dass** die relative Abweichung ER der Radien der Reifenlauffläche der Räder berechnet wird als Funktion der relativen Abweichung EV der Geschwindigkeiten der Räder gemäß dem Ausdruck ER(t) = ER(t-Te)*(1-λ2) + λ2*EV(t), wobei Te die Probennahmeperiode der Berechnungsmittel und λ2 ein Vergessen-Faktor ist, der Funktion der Probennahmeperiode ist.

5. Verfahren nach Anspruch 1 oder nach Anspruch 3 in Kombination mit Anspruch 1, **dadurch gekennzeichnet, dass** man im Verlauf von einem zusätzlichen Schritt die Längsgeschwindigkeit VL nach der Zeit ableitet, um die Längsbeschleunigung AL des Fahrzeugs zu bestimmen.

6. Verfahren nach Anspruch 2 in Kombination mit Anspruch 1, oder nach Anspruch 3 in Kombination mit Anspruch 1 und 2, **dadurch gekennzeichnet, dass** man im Verlauf von einem zusätzlichen Schritt die Multiplikation der Längsgeschwindigkeit VL und der Giergeschwindigkeit $\psi$ ausführt, um die transversale Beschleunigung AT des Fahrzeugs zu erhalten.

7. Verfahren nach irgendeinem der vorstehenden Ansprüche, **dadurch gekennzeichnet, dass,** wenn der Wert der relativen Abweichung ER der Radien der Reifenlauffläche der Räder (20, 22) größer als ein zweiter bestimmter Schwellenwert ist, eine Anomalie der Luftbereifung entdeckt wird.

FIG.1

FIG.2

FIG.3

**RÉFÉRENCES CITÉES DANS LA DESCRIPTION**

**Documents brevets cités dans la description**

- FR 9708324
- FR 9807526